# EUROPÄISCHE PATENTSCHRIFT

(11) **EP 2 345 777 B1**
(45) Veröffentlichungstag und Bekanntmachung des Hinweises auf die Patenterteilung: **20.12.2017**
(21) Anmeldenummer: 11000241.7
(22) Anmeldetag: 13.01.2011
(51) Int. Cl.: E04F 15/02, B32B 3/14, B32B 9/04, B32B 21/08, B32B 21/14, B32B 27/06, B29C 43/28, B32B 27/12, B32B 27/14

(54) **Bodenbelag**
Floor covering
Revêtement de sol

(30) Priorität: 15.01.2010 DE 202010001149 U
(43) Veröffentlichungstag der Anmeldung: 20.07.2011
(73) Patentinhaber: Bernhard Voith GmbH, 73037 Göppingen (DE)
(72) Erfinder: Voith, Bernhard, 73113 Ottenbach (DE); Fischer, Bernd, 71711 Murr (DE)
(74) Vertreter: Fürst, Siegfried

(56) Entgegenhaltungen:
- WO-A1-93/24295
- WO-A1-2007/144403

## Beschreibung

Die Erfindung betrifft einen Bodenbelag gemäß dem Oberbegriff des Anspruches 1.

Es ist eine Vielzahl von Bodenbelägen bekannt, die aus schmelzbaren Ausgangsmaterialien bestehen. Diese Ausgangsmaterialien liegen als Granulat, sogenannte Flakes oder auch Pulver vor. Ein solcher Bodenbelag ist z.B. ein Holzbodenbelag nach der WO-A 93/24295 oder ein Bauteil nach der WO-A 2007/144403 für einen Fußboden. Teilweise werden den Ausgangmaterialien andersfarbige Partikel beigemischt, damit ein interessantes Muster an der Oberfläche des Bodenbelages entsteht. Teilweise werden auch die Oberflächen der Bodenbeläge mit einer Prägeoberfläche versehen, damit ein entsprechendes Design möglich wird.

Werden beispielsweise Steinoberflächen bei Bodenbelägen nachgeahmt, so fehlen diesen Oberflächen aber der typische Glanz und das natürliche Aussehen des Steines.

Auf der anderen Seite sind Bodenbeläge aus Natursteinen sehr teuer, weil sie aus Gründen der Festigkeit eine Mindestdicke brauchen, um nicht beim Transport oder beim Verlegen zu zerbrechen. Ferner haben Steinböden den Nachteil, dass sie wegen ihrer spezifischen Wärmekapazität und der Wärmekapazität des Mörtelbettes bei unbeheizten Böden oftmals als zu kalt empfunden werden.

Es ist deshalb Aufgabe der Erfindung einen Bodenbelag zu finden, der zum einen natürlich aussieht, kostengünstig ist und zugleich wärmende Eigenschaften hat.

Die Aufgabe wird durch einen Bodenbelag mit den Merkmalen des Anspruches 1 gelöst. Die nachgeordneten Ansprüche 2 bis 14 offenbaren vorteilhafte Ausführungen der Erfindung.

Der Bodenbelag nach der Erfindung besteht aus wenigstens drei Schichten die mittels eines thermoplastischen Verfahrens miteinander verbunden werden, wobei eine dieser Schichten aus thermoplastisch verformbaren Ausgangsmaterialien besteht und die Verbindung der wenigstens drei Schichten unter Druck- und Temperatureinfluss zwischen zwei umlaufenden, zueinander mit Abstand angeordneten und einen Spalt bildenden Bändern einer Maschine erzeugt wird, wobei Abschnitte der Oberfläche des Bodenbelages aus einem Naturmaterial bestehen, wobei diese Abschnitte jeweils zueinander mit Abstand oder jeweils aneinander anliegend angeordnet sind und wobei dieses Naturmaterial aus Stein- oder Holzmaterial in Form von Steinfolien bzw. Furnier besteht und die nach dem Verlegen sichtbare Schicht des Bodenbelages ist.

Es hat sich gezeigt, dass die Schicht unter der Steinfolie, eine so genannte Zwischenschicht, aus einem elastischen Material bestehen sollte. Diese Zwischenschicht dient hierbei auch als eine Ausgleichsschicht, d.h. dass Schwankungen der Dicke der Steinplatten durch Kompensation der Dicke dieser Zwischenschicht vorgenommen werden. Das elastische Material der Zwischenschicht besteht aus thermoplastisch gebundenen elastischen Zuschlagstoffen.

Nach einer Ausführungsvariante sind diese elastischen Zuschlagstoffe Gummimehl bzw. Gummigranulat und/oder Korkmehl. Gegebenenfalls kann die Zwischenschicht auch Naturfasern enthalten.

Der Erfinder hat erkannt, dass es Steinmaterialien gibt, die aus sehr dünnen Schichten bestehen, die zudem nur einen geringen Zusammenhalt zueinander haben. Es besteht das Problem, dass sehr dünne Schichten (im Bereich 1 bis 3 mm) sich nicht mit Spaltwerkzeugen spalten lassen, weil dann durch das Einführen des Spaltwerkzeuges eine Biegung auf die abzuspaltende Schicht erfolgt, wodurch diese dann bricht.

Wird ein feinschichtiges Steinmaterial vor dem Spalten aber mit einem zunächst gasförmigen oder fluiden Verbinder, der nach dem Auftragen zu einer festen, insbesonderen elastischen Schicht wird, durchtränkt, so erfährt das Steinmaterial eine stützende Netzstruktur (vergleichbar mit einem Glasvlies), so dass sogar Biegekräfte auf die Gesteinsschicht aufgebracht werden, ohne dass diese Schicht bricht.

Ein solcher Verbinder kann zum Beispiel ein Kunstharz sein, welches solo verwendet wird oder einem Glasvliesgranulat beigemengt ist, oder vor dem Aufgeben des Kunstharzes wird auf besagtem Steinmaterial noch ein dünnes Glasvlies aufgelegt.

Nun kann man mit einem Werkzeug vom Rande eines Steinblockes her die Gesteinsschicht regelrecht abziehen. Diese Durchtränkung mit einem Verbinder, zum Beispiel Kunstharz, hat zudem noch den Vorteil, dass zugleich eine Substanz in dem Stein vorhanden ist, die sich mit Nachbarmaterialien verbinden kann.

Die Herstellung von Bodenbelägen oder ähnlichen Bahnen und die Maschinen hierzu sind beispielsweise aus den Schriften DE 197 51 516 C2 und DE 10 2007 063 261 A1 bekannt.

Bei dem Herstellungsprozess werden die thermoplastisch verformbaren Ausgangsmaterialien gleichmäßig auf ein unteres Band gestreut. Im weiteren Produktionsablauf drückt schließlich auch ein oberes Band auf das Ausgangsmaterial. In dem Spalt zwischen den beiden Bändern werden die Ausgangsmaterialien mittels einer Zusatzheizung angewärmt oder angeschmolzen und miteinander verpresst. Das Pressen erfolgt über paarweise beidseits der Bänder angeordnete Pressplatten oder auch Presswalzen. Zum Schluss erfolgt eine Kühlung der so entstandenen Bahn, die dann entweder plattenförmig abgelängt oder aufgerollt wird.

Um feine, dünne Naturmaterialschichten, insbesondere Gesteinsschichten (nachfolgend Steinfolien genannt) mit mittels oben genanntem thermoplastischem Verfahren hergestellten Bahnen zu verbinden, kann man die Steinfolien entweder gleich beim Herstellungsprozess der Bahn mit in die Maschine einlegen oder in einem zweiten Produktionsprozess mit der bereits hergestellten Bahn in der Maschine verbinden.

Bei der Herstellung des erfindungsgemäßen Bodenbelages können zunächst die Steinfolien auf das untere Band gelegt und dann erst die Granulate der anderen Materialien gestreut werden, oder erst werden die verschiedenen Granulate der anderen Materialien gestreut und dann erst die Steinfolien gelegt.

Damit die Oberflächen der Steinfolien, die vorzugsweise plattenförmig sind, nicht das Transportband der Maschine beschädigen oder umgekehrt die Steinoberfläche nicht zerdrückt wird, kann man zwischen der Oberfläche der Steinplatten und dem Transportband ein vorzugsweise bahnförmiges Silikonband mit durch die Maschine hindurchführen. Dieses Silikonband wird dann beispielsweise von einem Abroller (Haspel oder Tambour) am Anfang der Maschine abgewickelt und am Ende der Maschine wieder aufgewickelt. Ist dieses Silikonband schließlich vollständig durch die Maschine durchgelaufen, kann es wieder zum Maschinenanfang gebracht werden, um erneut als Schutzband zu dienen.

Als Steinfolien für den erfindungsgemäßen Bodenbelag haben sich Naturschiefer und andere fein spaltbare Gesteinsarten, wie Indischer Schiefer und Glimmer als besonders geeignet herausgestellt. Die Dicke der Steinplatten beträgt hierbei zwischen 1 bis 3 - vorzugsweise 1 bis 1,5 mm.

Unter der Zwischenschicht hat sich eine Lage aus elastifizierten Naturmaterialien und elastifizierten Bindern als vorteilhaft erwiesen. Als Naturmaterialien kommen hier Kork, Bambus-, Kokos- oder Sisalfasern in Frage.

Nachdem die Steinfolien mit den übrigen Materialien thermoplastisch verbunden wurden, werden mittels einer Vorrichtung, z.B. einer Säge, einzelne Platten oder jeweils eine Bahn bestimmter Länge und Breite erzeugt, die dann den erfindungsgemäßen Bodenbelag darstellen.

In einer anderen Ausgestaltung der Erfindung besteht das nach dem Verlegen des Bodenbelages sichtbare Material aus einem fein spaltbaren Holzmaterial. Das Holzmaterial wird mit den Verfahren gespalten, die aus der Furnierherstellung bekannt sind. D.h., dass die Furniere durch Schälen oder das so genannte Messern oder - wenn auch in seltenen Fällen - durch Sägen hergestellt werden. Zum Verbinden der Furniere mit dem thermoplastischen Material kann ebenfalls Kunstharz verwendet werden. Die Schichtdicken des Holzmaterials können hier von 0,5 bis 5 mm - vorzugsweise von 1 bis 2 mm - betragen.

Ein Bodenbelag mit thermoplastischem Untergrund und Furnier als Deckschicht hat ebenfalls den Vorteil, dass die Oberfläche des Belages ein Naturprodukt darstellt und zugleich nicht fußkalt ist.

Auch bei dieser Ausführungsvariante der Erfindung sollte die Schicht unter dem Furnier, eine so genannte Zwischenschicht, aus einem elastischen Material bestehen. Diese Zwischenschicht dient hierbei auch als eine Ausgleichsschicht, d.h. dass Schwankungen der Dicke des Furniers durch Kompensation der Dicke dieser Zwischenschicht vorgenommen werden. Das elastische Material der Zwischenschicht besteht aus thermoplastisch gebundenen elastischen Zuschlagstoffen, wie Gummimehl bzw. Gummigranulat und/oder Korkmehl. Gegebenenfalls kann die Zwischenschicht auch Naturfasern enthalten.

In weiterer Ausgestaltung ist hier ebenfalls unter der Zwischenschicht eine Lage aus elastifizierten Naturmaterialien und elastifizierten Bindern vorgesehen. Das Naturmaterial ist/sind hier Kork, Bambus-, Kokos- oder Sisalfasern.

## Patentansprüche

1. Bodenbelag bestehend aus wenigstens drei Schichten, die mittels eines thermoplastischen Verfahrens miteinander verbunden werden, wobei eine der Schichten aus thermoplastisch verformbaren Ausgangsmaterialien besteht und die Verbindung der wenigstens drei Schichten unter Druck- und Temperatureinfluss zwischen zwei umlaufenden, zueinander mit Abstand angeordneten und einen Spalt bildenden Bändern einer Maschine erzeugt wird,
***dadurch gekennzeichnet,***
**dass** Abschnitte der Oberfläche des Bodenbelages aus einem Naturmaterial bestehen, wobei diese Abschnitte jeweils zueinander mit Abstand oder jeweils aneinander anliegend angeordnet sind und wobei dieses Naturmaterial aus Stein- oder Holzmaterial in Form von Steinfolien bzw. Furnier besteht und die nach dem Verlegen sichtbare Schicht des Bodenbelages ist, und dass unter der Schicht aus Stein- oder Holzmaterial eine Zwischenschicht angeordnet ist, die im Wesentlichen aus einem elastischen Material besteht, welches aus thermoplastisch gebundenen elastischen Zuschlagstoffen besteht.

2. Bodenbelag nach Anspruch 1,
***dadurch gekennzeichnet,***
**dass** die Steinfolie aus Naturschiefer oder Indischem Schiefer oder Glimmer besteht.

3. Bodenbelag nach Anspruch 1 oder 2,
***dadurch gekennzeichnet,***
**dass** das Steinmaterial eine Schichtdicke von 1 bis 3 mm aufweist.

4. Bodenbelag nach Anspruch 3,
***dadurch gekennzeichnet,***
**dass** das Steinmaterial eine Schichtdicke von 1 bis 1,5 mm aufweist.

5. Bodenbelag nach Anspruch 1,
***dadurch gekennzeichnet,***
**dass** die thermoplastisch gebundenen Zuschlagstoffe Gummimehl, Gummigranulat, Korkmehl und/oder Naturfasern sind.

6. Bodenbelag nach mindestens einem der Ansprüche 1 oder 5,
***dadurch gekennzeichnet,***
**dass** unter der Zwischenschicht eine weitere Lage angeordnet ist, die im Wesentlichen aus einem elastifizierten Naturmaterial und einem elastifizierten Binder besteht.

7. Bodenbelag nach Anspruch 6,
***dadurch gekennzeichnet,***
**dass** das Naturmaterial Kork enthält.

8. Bodenbelag nach Anspruch 6,
***dadurch gekennzeichnet,***
**dass** das Naturmaterial Bambusfasern enthält.

9. Bodenbelag nach Anspruch 6,
***dadurch gekennzeichnet,***
**dass** das Naturmaterial Kokosfasern enthält.

10. Bodenbelag nach Anspruch 6,
***dadurch gekennzeichnet,***
**dass** das Naturmaterial Sisalfasern enthält.

11. Bodenbelag nach mindestens einem der Ansprüche 6 bis 10,
***dadurch gekennzeichnet,***
**dass** die Naturmaterialien mit einem thermoplastisch verformbaren Werkstoff benetzt sind.

12. Bodenbelag nach einem der Ansprüche 1 oder 5 bis 11, ***dadurch gekennzeichnet,***
**dass** das Naturmaterial für die Abschnitte der Oberfläche des Bodenbelages aus einem Holzmaterial in Form von Furnier besteht.

13. Bodenbelag nach Anspruch 12,
***dadurch gekennzeichnet,***
**dass** das Furnier eine Schichtdicke von 0,5 bis 5 mm aufweist.

14. Bodenbelag nach Anspruch 13,
***dadurch gekennzeichnet,***
**dass** das Furnier eine Schichtdicke von 1 bis 2 mm aufweist.

## Claims

1. Floor covering consisting of at least three layers which are connected together by means of a thermoplastic process, wherein one of the layers consists of thermoplastically deformable starting materials and the connection of the at least three layers is produced under the influence of pressure and temperature between two encircling belts arranged at a spacing from one another and forming a gap,
**characterised in that** sections of the surface of the floor covering consist of a natural material, wherein these sections are respectively arranged at a spacing from one another or respectively arranged to lie against one another and wherein this natural material consists of stone material or wood material in the form of stone-surfaced sheeting or wood veneer and is the layer of the floor covering visible after laying and
that arranged under the layer of stone material or wood material is an intermediate layer consisting substantially of a resilient material which consists of thermoplastically bound resilient additives.

2. Floor covering according to claim 1,
**characterised in that** the stone-surfaced sheeting consists of natural slate or Indian slate or mica.

3. Floor covering according to claim 1 or 2,
**characterised in that** the stone material has a layer thickness of 1 to 3 millimetres.

4. Floor covering according to claim 3,
**characterised in that** the stone material has a layer thickness of 1 to 1.5 millimetres.

5. Floor covering according to claim 1,
**characterised in that** the thermoplastically bound additives are rubber powder, rubber granulate, cork powder and/or natural fibres.

6. Floor covering according to at least one of claims 1 and 5,
**characterised in that** a further layer substantially consisting of an elastified natural material and an elastified binder is arranged under the intermediate layer.

7. Floor covering according to claim 6,
**characterised in that** the natural material contains cork.

8. Floor covering according to claim 6,
**characterised in that** the natural material contains bamboo fibres.

9. Floor covering according to claim 6,
**characterised in that** the natural material contains coconut fibres.

10. Floor covering according to claim 6,
**characterised in that** the natural material contains sisal fibres.

11. Floor covering according to at least one of claims 6 to 10,
**characterised in that** the natural materials are wetted with a thermoplastically deformable material.

12. Floor covering according to any one of claims 1 and 5 to 11,
**characterised in that** the natural material for the sections of the surface of the floor covering consists of a wood material in the form of veneer.

13. Floor covering according to claim 12,
**characterised in that** the veneer has a layer thickness of 0.5 to 5 millimetres.

14. Floor covering according to claim 13,
**characterised in that** the veneer has a layer thickness of 1 to 2 millimetres.

## Revendications

1. Revêtement de sol composé d'au moins trois couches reliées les unes aux autres au moyen d'un procédé thermoplastique, l'une desdites couches étant constituée de matériaux de départ thermoplastiquement déformables, et la liaison desdites couches au nombre minimal de trois étant instaurée, sous l'influence de la pression et de la température, entre deux rubans d'une machine défilant en boucle, placés à distance l'un de l'autre et réservant un interstice,
**caractérisé par le fait**
**que** des régions de la surface dudit revêtement de sol sont constituées d'un matériau naturel, ces régions étant disposées, respectivement, à distance les unes des autres ou en applique les unes contre les autres, et ce matériau naturel consistant en de la pierre ou en du bois revêtant, respectivement, la forme de feuilles de pierre ou d'un placage, et se présentant comme la couche dudit revêtement de sol qui est visible à l'issue de la pose ; et
**qu'**une couche intermédiaire, disposée au-dessous de la couche en pierre ou en bois, est pour l'essentiel constituée d'un matériau élastique consistant en des additifs élastiques à liaison thermoplastique.

2. Revêtement de sol selon la revendication 1,
**caractérisé par le fait que** la feuille de pierre consiste en de l'ardoise naturelle ou en de l'ardoise indienne, voire en du mica.

3. Revêtement de sol selon la revendication 1 ou 2,
**caractérisé par le fait que** la pierre présente une épaisseur de couche mesurant de 1 à 3 mm.

4. Revêtement de sol selon la revendication 3,
**caractérisé par le fait que** la pierre présente une épaisseur de couche mesurant de 1 à 1,5 mm.

5. Revêtement de sol selon la revendication 1,
**caractérisé par le fait que** les additifs à liaison thermoplastique sont de la poudre de caoutchouc, du granulat de caoutchouc, de la poudre de liège et/ou des fibres naturelles.

6. Revêtement de sol selon au moins l'une des revendications 1 ou 5,
**caractérisé par le fait qu'**une couche supplémentaire disposée au-dessous de la couche intermédiaire est constituée, pour l'essentiel, d'un matériau naturel plastifié et d'un liant plastifié.

7. Revêtement de sol selon la revendication 6,
**caractérisé par le fait que** le matériau naturel renferme du liège.

8. Revêtement de sol selon la revendication 6,
**caractérisé par le fait que** le matériau naturel renferme des fibres de bambou.

9. Revêtement de sol selon la revendication 6,
**caractérisé par le fait que** le matériau naturel renferme des fibres de coco.

10. Revêtement de sol selon la revendication 6,
**caractérisé par le fait que** le matériau naturel renferme des fibres de sisal.

11. Revêtement de sol selon au moins l'une des revendications 6 à 10,
**caractérisé par le fait que** les matériaux naturels sont imprégnés d'une substance thermoplastiquement déformable.

12. Revêtement de sol selon l'une des revendications 1 ou 5 à 11,
**caractérisé par le fait que** le matériau naturel, dévolu aux régions de la surface dudit revêtement de sol, est constitué d'un bois revêtant la forme d'un placage.

13. Revêtement de sol selon la revendication 12,
**caractérisé par le fait que** le placage présente une épaisseur de couche mesurant de 0,5 à 5 mm.

14. Revêtement de sol selon la revendication 13,
**caractérisé par le fait que** le placage présente une épaisseur de couche mesurant de 1 à 2 mm.
